# EUROPEAN PATENT APPLICATION

(11) **EP 2 933 731 A1**
(43) Date of publication of application: **21.10.2015**
(21) Application number: 13788147.0
(22) Date of filing: 24.06.2013
(51) Int. Cl.: G06F 17/30

(54) **METHOD FOR CONFIGURING BROWSER BOOKMARKS, DEVICE AND TERMINAL THEREOF**

(30) Priority: 14.12.2012 CN 201210543860
(71) Applicant: ZTE Corporation, Shenzhen, Guangdong 518057 (CN)
(72) Inventor: LI, Cong, Shenzhen Guangdong 518057 (CN)
(74) Representative: Tischner, Oliver
(86) International application number: PCT/CN2013/077816
(87) International publication number: WO 2013/167006

(57) **Abstract**

A setting method and device for a browser bookmark, and a terminal are described. The method includes: a first network address is acquired from a bookmark to be stored, and a first root website is extracted from the first network address; if a tree-like structure cluster has been locally established, the tree-like structure cluster is obtained, wherein the tree-like structure cluster includes a domain name tree of at least one root website, and corresponding bookmarks are stored on nodes in the domain name tree; a domain name tree of the first root website is modified or constructed according to whether there is the domain name tree of the first root website in the tree-like structure cluster or not, and the bookmark to be stored is stored on a corresponding node of the domain name tree of the first root website; and the domain name tree of the first root website and the first network address associated with the bookmark to be stored are stored. According to the disclosure, the problems of bookmark setting disorder and searching difficulty can be improved, and user experiences in bookmarks can be improved.

## Description

### TECHNICAL FIELD

The disclosure relates to the technical field of browsers, and in particular to a setting method and device for a browser bookmark, and a terminal.

### BACKGROUND

Along with the development of a communication technology, a mobile communication terminal, such as a smart phone, is used more and more widely. At the same time, a data service, particularly a browser, is used more and more frequently, and the browser has become the most basic function for a user. By virtue of a browser bookmark, the user may store a concerned web page for subsequent direct browsing, and such a function brings great convenience to the user; therefore, the browser bookmark becomes a function frequently used by the user, and grabs more attention.

In the related art, a bookmark function in a browser of a communication terminal adopts a method of directly storing a concerned web page address. Although a manner of establishing different folders and then storing bookmarks in the corresponding folders may be adopted by the method, the method is complicated in operation, so that the bookmarks are always set and displayed in disorder, and it is relatively difficult for a user to search for a certain bookmark particularly under the conditions of long-term use of the user and establishment of a great number of bookmarks.

Therefore, a method capable of improving the problems of bookmark setting disorder and searching difficulty in the related art and improving user experiences in bookmarks is in urgent need.

### SUMMARY

In view of this, a purpose of the disclosure is to provide a setting method and device for a browser bookmark, and a terminal, so as to improve problems of bookmark setting disorder and searching difficulty and user experiences in bookmarks.

In order to solve the technical problem, solutions provided by the disclosure are implemented as follows.

A setting method for a browser bookmark is provided, which includes:
acquiring a first network address from a bookmark to be stored, and extracting a first root website from the first network address;
if a tree-like structure cluster has been locally established, obtaining the tree-like structure cluster, wherein the tree-like structure cluster may include a domain name tree of at least one root website, and corresponding bookmarks are stored on nodes in the domain name tree;
modifying or constructing a domain name tree of the first root website according to whether there is the domain name tree of the first root website in the tree-like structure cluster or not, and storing the bookmark to be stored on a corresponding node of the domain name tree of the first root website; and
storing the domain name tree of the first root website and the first network address associated with the bookmark to be stored.

Preferably, the method may further include: after storing the domain name tree of the first root website and the first network address associated with the bookmark to be stored,
updating bookmark displaying of the tree-like structure cluster to display and manage all stored bookmarks with a new tree-like structure cluster structure.

Preferably, the modifying or constructing the domain name tree of the first root website according to whether there is the domain name tree of the first root website in the tree-like structure cluster or not, and storing the bookmark to be stored on the corresponding node of the domain name tree of the first root website may include:
judging whether there is the domain name tree of the first root website in the tree-like structure cluster or not;
if yes, then storing the bookmark to be stored on the corresponding node of the domain name tree of the first root website of the first network address according to a hierarchical structure of the first network address; and
if no, then constructing the domain name tree of the first root website, and storing the bookmark to be stored on the corresponding node of the domain name tree of the first root website according to the hierarchical structure of the first network address.

Preferably, the method may further include: after extracting the first root website from the first network address,
if there is no tree-like structure cluster locally established, establishing a blank tree-like structure cluster;
constructing the domain name tree of the first root website, and storing the bookmark to be stored on the corresponding node of the domain name tree of the first root website; and
storing the constructed domain name tree of the first root website and the first network address associated with the bookmark to be stored.

Preferably, the method may further include: before acquiring the first network address from the bookmark to be stored,
setting a display mode of the tree-like structure cluster, wherein the display mode of the tree-like structure cluster may be compatible with display modes of the bookmarks which have been stored, so that the display mode of the bookmark may be switched or set without changing bookmark records which have been locally stored.

An embodiment of the disclosure further provides a setting device for a browser bookmark, which includes:
a first acquisition unit, configured to acquire a first network address from a bookmark to be stored, and extract a first root website from the first network address;
a second acquisition unit, configured to, if a tree-like structure cluster has been established by a storage module, acquire the tree-like structure cluster from the storage module, wherein the tree-like structure cluster may include a domain name tree of at least one root website;
a matching unit, configured to judge whether there is a domain name tree of the first root website in the first acquisition unit in the tree-like structure cluster stored in the second acquisition unit or not, and send a judgment result to a structure cluster updating module;
the structure cluster updating module, configured to modify or construct the domain name tree of the first root website according to the judgment result sent by the matching unit, store the bookmark to be stored on a corresponding node of the domain name tree of the first root website, and store the bookmark to be stored in the storage module; and
the storage module, configured to store the modified or constructed domain name tree of the first root website from the structure cluster updating module and the first network address associated with the bookmark to be stored.

Preferably, the device may further include:
a displaying updating module, configured to update bookmark displaying of the tree-like structure cluster to display and manage all stored bookmarks with a new tree-like structure cluster structure.

Preferably, the matching module may be configured to judge whether there is the domain name tree of the first root website in the tree-like structure cluster or not, and send the judgment result to the structure cluster updating module; and
correspondingly, the structure cluster updating module may be configured to, if the judgment result sent by the matching module is yes, store the bookmark to be stored on the corresponding node of the domain name tree of the first root website of the first network address according to a hierarchical structure of the first network address, and if the judgment result sent by the matching module is no, construct the domain name tree of the first root website, and store the bookmark to be stored on the corresponding node of the domain name tree of the first root website according to the hierarchical structure of the first network address.

Preferably, the device may further include:
an establishment module, configured to, if there is no tree-like structure cluster established in the storage module after the first root website is extracted from the first network address, establish a blank tree-like structure cluster, and trigger the structure cluster updating module, wherein
correspondingly, the structure cluster updating module may be configured to store the bookmark to be stored on the corresponding node of the domain name tree of the first root website, and store the constructed domain name tree of the first root website and the first network address associated with the bookmark to be stored.

Preferably, the device may further include:
a setting unit, configured to, before the first network address is acquired from the bookmark to be stored, set a display mode of the tree-like structure cluster in the displaying updating module, wherein the display mode of the tree-like structure cluster may be compatible with display modes of the bookmarks which have been stored, so that the display mode of the bookmark may be switched or set without changing bookmark records which have been locally stored.

An embodiment of the disclosure further provides a terminal, which includes the abovementioned device.

From the above, the embodiment of the disclosure at least has beneficial effects as follows:
1) based on the characteristic of a hierarchical tree-like structure of website addresses of the same main website, the browser bookmarks are set and displayed with a natural hierarchical structure of the tree-like structure, which is undoubtedly accordant with own characteristic of the website, so that the bookmarks can be automatically hierarchically processed and displayed with the tree-like structure without additional user operation, displaying layout management of the bookmarks is greatly optimized, searching and positioning speed of concerned bookmarks is increased, and user experiences are further greatly improved;
2) by the automatically constructed tree-like hierarchical structure, actual websites based on the same main website are displayed and managed in the same tree-like structure, which is matched with a behavioural habit of a user, so that the user experiences can be improved; and
3) compatibility with an existing bookmark display manner is achieved, and the habit of the user can be smoothly transitioned.

### BRIEF DESCRIPTION OF THE DRAWINGS

In order to describe technical solutions of embodiments of the disclosure more clearly, the drawings required in the embodiments are simply introduced below, obviously, the drawings described below are only some embodiments of the disclosure, and those skilled in the art may further obtain other drawings or embodiments according to the disclosure on the premise of no creative work.
Fig. 1 is a flowchart of a setting method for a browser bookmark according to embodiment 1 of the disclosure;
Fig. 2 is a flowchart of construction and modification confirmation of an actual-website-based structure tree according to embodiment 2 of the disclosure; and
Fig. 3 is a structure diagram of a setting device for a browser bookmark according to embodiment 3 of the disclosure.

### DETAILED DESCRIPTION

By researches and analysis, the inventor finds that web page addresses of the same main website usually presents a hierarchical tree-like structure, which may be embodied by layers and web page addresses clicked by a user. The user sets and stores bookmarks based on web pages in different layers in the main website, the bookmarks are displayed in parallel in the same layer in the related art, namely equivalent to completely unrelated web page addresses, and such a flat bookmark setting/displaying manner may cause bookmark searching and browsing difficulty and greatly prolong time for the user to search for and browse a concerned webpage, particularly under the condition of more stored bookmarks.

According to an embodiment of the disclosure, based on the hierarchical tree-like structure of the website addresses of the same main website, the setting management and displaying of the browser bookmarks are implemented with a natural hierarchical structure of the tree-like structure, so that displaying management disorder and searching difficulty caused by the flat displaying of the bookmarks may be eliminated without additional user operation, the user may clearly search and browse the concerned bookmark according to the layer, and user experiences are greatly improved.

The technical solutions of the embodiments of the disclosure are completely described below with reference to the drawings in the embodiments of the disclosure, and obviously, the described embodiments are a part of embodiments of the disclosure, and are not all the embodiments. Based on the embodiments of the disclosure, the other embodiments obtained by those skilled in the art on the premise of no creative work shall fall within the scope of protection of the disclosure.

### Embodiment 1

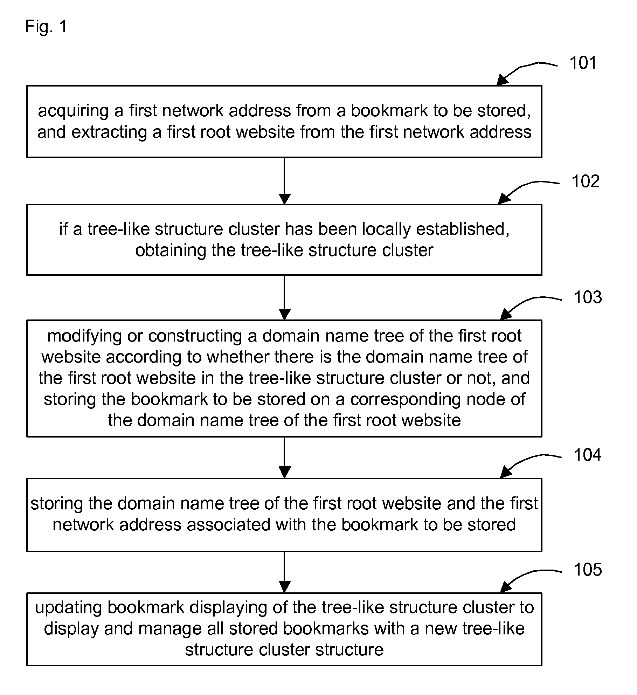

In the embodiment, description is made by taking a mobile communication terminal as an example, and a setting method for a browser bookmark on the terminal is provided. According to the embodiment of the disclosure, bookmark information is stored by virtue of a tree-like structure cluster, the tree-like structure cluster is initially blank, a domain name tree of more than one root website is subsequently created in the tree-like structure cluster by using the method according to the embodiment, each domain name tree is of a tree-like topological structure, and each stored bookmark is stored on a corresponding node of the corresponding domain name tree. As shown in Fig. 1, the method provided by the embodiment includes the following steps:
Step 101: acquiring a first network address from a bookmark to be stored, and extracting a first root website from the first network address.

Here, the extracting the first root website includes that: extracting a root website of the first network address to obtain the first root website according to a hierarchical structure of the first network address.

Step 102: if a tree-like structure cluster has been locally established, obtaining the tree-like structure cluster, wherein the tree-like structure cluster includes a domain name tree of at least one root website, and corresponding bookmarks are stored on nodes in the domain name tree.

Here, each bookmark is always located on a node corresponding to the domain name tree (structure tree) to which it belongs.

All websites under the same root website (i.e. a main website) in the tree-like structure cluster are located in the same domain name tree; and the corresponding root websites are stored on root nodes of the domain name trees, that is, each domain name tree is a tree-like topological structure taking the root website as the root node, all the websites under the root website are stored on the corresponding nodes of the tree-like topological structure according to a website hierarchical structure.

Step 103: modifying or constructing a domain name tree of the first root website according to whether there is the domain name tree of the first root website in the tree-like structure cluster or not, and storing the bookmark to be stored on a corresponding node of the domain name tree of the first root website.

Here, a user may automatically set a corresponding bookmark identifier (bookmark name) for the bookmark to be stored for convenient memorization. Bookmark data is stored by storing the bookmark to be stored on the corresponding node of the domain name tree of the first root website.

The step may specifically include:
judging whether there is the domain name tree of the first root website in the tree-like structure cluster or not, namely whether there is a domain name tree of which a root node website is the first root website or not;
if yes, then storing the bookmark to be stored on the corresponding node of the domain name tree of the first root website of the first network address according to a hierarchical structure of the first network address; and
if no, then constructing the domain name tree of the first root website, and storing the bookmark to be stored on the corresponding node of the domain name tree of the first root website according to the hierarchical structure of the first network address.

Step 104: storing the domain name tree of the first root website and the first network address associated with the bookmark to be stored.

Here, the structure of the domain name tree is updated, and the first network address associated with the bookmark to be stored is stored, so that a corresponding web page may be rapidly browsed according to the first network address associated with the bookmark to be stored when the user subsequently selects the bookmark to be stored.

Step 105: updating bookmark displaying of the tree-like structure cluster to display and manage all stored bookmarks with a new tree-like structure cluster structure.

By the step, the bookmark of the tree-like structure cluster is displayed to the user, so that the user may conveniently search for the bookmark, and user experiences in bookmarks can be improved.

As a preferred implementation mode, if there is no tree-like structure cluster established after the first root website is extracted from the first network address in step 101, the method may further include:
Step 100: establishing a blank tree-like structure cluster, and setting a display mode of the tree-like structure cluster, wherein the display mode of the tree-like structure cluster is compatible with display modes of the stored bookmarks, so that the display mode of the bookmark may be switched or set without changing bookmark records which have been locally stored.

Here, in order to set and switch the display mode of the bookmark without changing the bookmark records which have been stored in the mobile terminal, the display mode adopts an existing direct bookmark display mode as a default.

From the above, in the embodiment, a website stored as a bookmark is split in a tree-like structure by taking its main website (root website) as a root according to a website structure characteristic to construct or modify a main-website-based website tree-like structure, so that each node represents a corresponding actual website, and the actual website of the bookmark is located on such a node. Meanwhile, the corresponding bookmarks are stored and maintained based on such a tree-like structure. Moreover, the corresponding bookmarks are displayed and managed by virtue of the tree-like structure, so that the shortcomings of setting and displaying disorder and searching difficulty caused by the flat displaying of the bookmarks are greatly overcome on the premise of no additional user operation by virtue of the automatically constructed and displayed tree-like structure, the user may clearly search for and browse the concerned bookmark according to the layer and select a required bookmark to browse the corresponding web page corresponding to the actual website (i.e. a specific website of the bookmark) corresponding to the bookmark, and user experiences are greatly improved.

### Embodiment 2

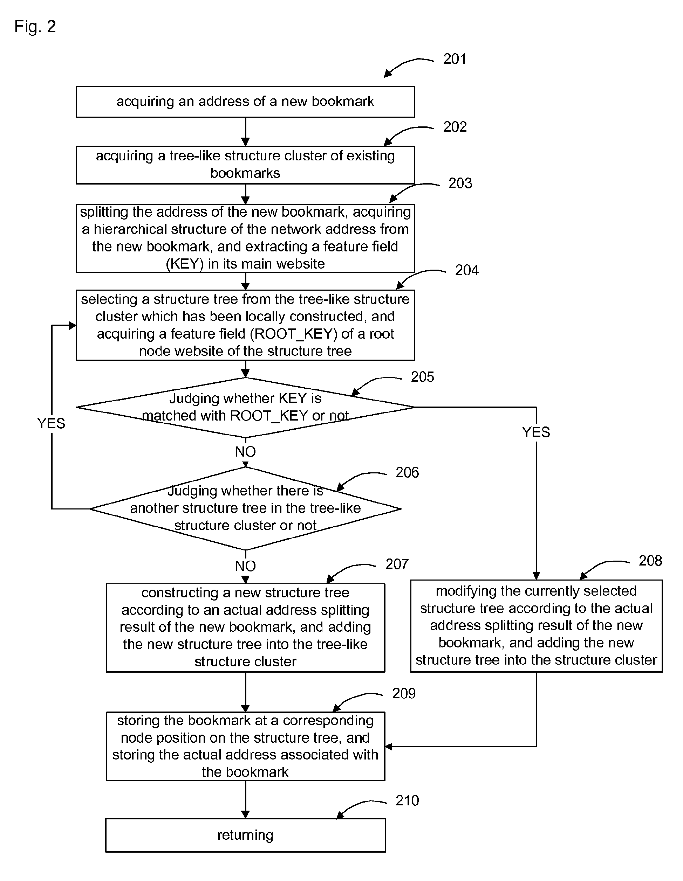

In the embodiment, description is also made by taking a mobile communication terminal as an example, and further description is made by detailed flow description. Fig. 2 is a flowchart of construction and modification confirmation of an actual-website-based structure tree according to embodiment 2, and the flow includes the following steps:
Step 201: acquiring an address of new bookmark.

For example, when a user needs to store a certain web page as a bookmark, a corresponding bookmark storage command is input, and in the embodiment, an address of the web page is acquired to obtain the address of the new bookmark by receiving the command.

Here, it is supposed that there is no bookmark which has been stored before the address of the webpage in the embodiment.

Step 202: acquiring a tree-like structure cluster of existing bookmarks.

Step 203: splitting the address of the new bookmark, acquiring a hierarchical structure of the network address from the new bookmark, and extracting a feature field (KEY) in its main website, the feature field being configured to uniquely identify the main website.

Step 204: selecting a structure tree from the tree-like structure cluster which has been locally constructed, and acquiring a feature field (ROOT_KEY) of a root node website of the structure tree.

Here, the tree structure may be selected in a traversing manner of extracting structure trees in the tree-like structure cluster one by one, and judgments are made for the currently selected structure tree as follows.

Step 205: judging whether KEY is matched with ROOT_KEY or not, entering step 208 if KEY is matched with ROOT_KEY, otherwise entering step 206.

Step 206: judging whether there is a structure tree which is not subjected to judgment processing in the tree-like structure cluster or not, if yes, then entering step 204, otherwise, entering step 207.

Step 207: constructing a new structure tree according to an actual address splitting result of the new bookmark, adding the new structure tree into the tree-like structure cluster, and entering step 209.

A feature field of a root node of the new structure tree is KEY, and the new structure tree has a hierarchical structure corresponding to an actual address of the new bookmark.

Step 208: modifying the currently selected structure tree according to the actual address splitting result of the new bookmark, adding the new structure tree into the structure cluster, and entering step 209.

Here, the modifying the currently selected structure tree includes that: modifying the currently selected structure tree to endow the currently selected structure tree with the hierarchical structure corresponding to the actual address of the new bookmark according to the hierarchical structure of the actual address of the new bookmark.

Step 209: storing the bookmark at a corresponding node position on the structure tree, and storing the actual address associated with the bookmark.

Step 210: ending the flow, and returning an indication message indicating that the bookmark has been successfully stored.

### Embodiment 3

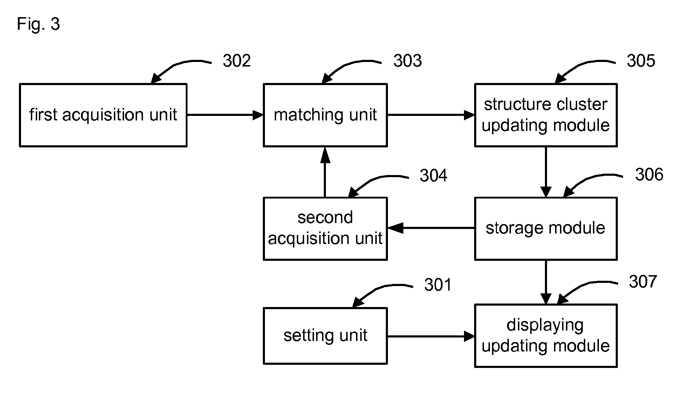

The embodiment further provides a setting device for a browser bookmark, and the device adopts a tree-structure-based browser bookmark setting management and displaying method. Fig. 3 is a structure diagram of the device provided by the embodiment. The device mainly includes: a setting unit 301, a first acquisition unit 302, a matching unit 303, a second acquisition unit 304, a structure cluster updating module 305, a storage module 306 and a displaying updating module 307, wherein
the setting unit 301 is configured to, before a first network address is acquired from a bookmark to be stored, set a display mode of a tree-like structure cluster, wherein the display mode of the tree-like structure cluster is compatible with display modes of bookmarks which have been stored, so that the display mode of the bookmark may be switched or set without changing bookmark records which have been locally stored;
the first acquisition unit 302 is configured to acquire the first network address from the bookmark to be stored, and extract a first root website from the first network address;
the matching unit 303 is configured to judge whether there is a domain name tree of the first root website in the first acquisition unit 302 in the tree-like structure cluster stored in the second acquisition unit 304 or not, and send a judgment result to the structure cluster updating module 305;
the second acquisition unit 304 is configured to, if the tree-like structure cluster has been established by the storage module 306, acquire the tree-like structure cluster from the storage module 306, wherein the tree-like structure cluster includes a domain name tree of at least one root website;
the structure cluster updating module 305 is configured to modify or construct the domain name tree of the first root website according to the judgment result sent by the matching unit 303, store the bookmark to be stored on a corresponding node of the domain name tree of the first root website, and store the bookmark to be stored in the storage module 306;
the storage module 306 is configured to store the modified or constructed domain name tree of the first root website from the structure cluster updating module 305 and the first network address associated with the bookmark to be stored; and
the displaying updating module 307 is configured to update bookmark displaying of the tree-like structure cluster to display and manage all stored bookmarks in the storage module 306 with a new tree-like structure cluster structure.

Here, the structure cluster updating module 305 may further be configured to judge whether there is the domain name tree of the first root website in the tree-like structure cluster or not; if yes, store the bookmark to be stored on the corresponding node of the domain name tree of the first root website according to a hierarchical structure of the first network address; and if no, construct the domain name tree of the first root website, and store the bookmark to be stored on the corresponding node of the domain name tree of the first root website according to the hierarchical structure of the first network address.

Here, the device may further includes an establishment module (not shown in Fig. 3), configured to, if there is no tree-like structure cluster locally established after the first root website is extracted from the first network address, establish a blank tree-like structure cluster, and trigger the structure cluster updating module 305.

Based on the device, the embodiment further provides a communication terminal, which includes the abovementioned device. In order to decrease the length, the communication terminal is not repeated here.

It should be noted that functions of a part of units in the embodiment may be realized by a master control chip, but logic relationships involved in the realization of the corresponding functions through the master control chip are the same as those of the units, so that it may not be considered as a difference from the embodiment, and any hardware function structure involved in the establishment of logic relationships the same as those in the embodiment fall within the scope of protection of the disclosure.

From the above, the embodiment of the disclosure has advantages as follows: by the method, device and terminal of the embodiment, based on the characteristic of a hierarchical tree-like structure of website addresses of the same main website, the browser bookmarks are set and displayed with a natural hierarchical structure of the tree-like structure, which is undoubtedly accordant with own characteristic of the website, so that the bookmarks can be automatically hierarchically processed and displayed with the tree-like structure without additional user operation, displaying layout management of the bookmarks is greatly optimized, searching and positioning speed of concerned bookmarks is increased, and user experiences are further greatly improved; in addition, by the automatically constructed tree-like hierarchical structure, actual websites based on the same main website are displayed and managed in the same tree-like structure, which is matched with a behavioural habit of a user; and moreover, compatibility with an existing bookmark display manner is further achieved, and the habit of the user can be smoothly transitioned.

Many functional parts described in the specification are called modules/units, so that dependence of an implementation mode is more specially emphasized.

In the embodiment of the disclosure, the modules may be implemented by software so as to be executed by various types of processors. For example, an identified executable code module may include one or more physical or logical blocks of a computer instruction, and for example, it may be constructed into an object, process or function. However, executable codes of the identified module are not required to be physically located together, but may include different instructions stored at different positions, and when these instructions are logically combined, the module is structured, and a prescribed purpose of the module is achieved.

Practically, the executable code module may be a single instruction or many instructions, and may even be distributed on multiple different code segments, distributed in different programs and distributed across multiple pieces of memory equipment. Similarly, operating data may be identified in the module, and may be implemented according to any proper form and organized in any proper type of data structure. The operating data may be collected as a single dataset, or may be distributed at different positions (including different storage equipment), and may at least partially exist in a system or network as an electronic signal only.

When the module is implemented by virtue of software, in consideration of level of an existing hardware process, those skilled in the art may realize a corresponding function of the module which can be implemented by software by constructing a corresponding hardware circuit under the condition of not taking the cost into account, and the hardware circuit includes a conventional Very Large Scale Integrated (VLSI) circuit, a gate array, an existing semiconductor such as a logic chip and a transistor, or other discrete elements. The module may further be implemented by virtue of programmable hardware equipment such as a field programmable gate array, a programmable array logic and programmable logic equipment.

The above is only the implementation mode of the disclosure, it should be pointed out that those skilled in the art may make various improvements and embellishments on the premise of not departing from the principle of the disclosure, and these improvements and embellishments shall fall within the scope of protection of the disclosure.

## Claims

1. A setting method for a browser bookmark, comprising:
acquiring a first network address from a bookmark to be stored, and extracting a first root website from the first network address;
if a tree-like structure cluster has been locally established, obtaining the tree-like structure cluster, wherein the tree-like structure cluster comprises a domain name tree of at least one root website, and corresponding bookmarks are stored on nodes in the domain name tree;
modifying or constructing a domain name tree of the first root website according to whether there is the domain name tree of the first root website in the tree-like structure cluster or not, and storing the bookmark to be stored on a corresponding node of the domain name tree of the first root website; and
storing the domain name tree of the first root website and the first network address associated with the bookmark to be stored.

2. The method according to claim 1, further comprising: after storing the domain name tree of the first root website and the first network address associated with the bookmark to be stored,
updating bookmark displaying of the tree-like structure cluster to display and manage all stored bookmarks with a new tree-like structure cluster structure.

3. The method according to claim 1, wherein the modifying or constructing the domain name tree of the first root website according to whether there is the domain name tree of the first root website in the tree-like structure cluster or not, and storing the bookmark to be stored on the corresponding node of the domain name tree of the first root website comprises:
judging whether there is the domain name tree of the first root website in the tree-like structure cluster or not;
if yes, then storing the bookmark to be stored on the corresponding node of the domain name tree of the first root website of the first network address according to a hierarchical structure of the first network address; and
if no, then constructing the domain name tree of the first root website, and storing the bookmark to be stored on the corresponding node of the domain name tree of the first root website according to the hierarchical structure of the first network address.

4. The method according to any one of claims 1 to 3, further comprising: after extracting the first root website from the first network address,
if there is no tree-like structure cluster locally established, establishing a blank tree-like structure cluster;
constructing the domain name tree of the first root website, and storing the bookmark to be stored on the corresponding node of the domain name tree of the first root website; and
storing the constructed domain name tree of the first root website and the first network address associated with the bookmark to be stored.

5. The method according to claim 4, further comprising: before acquiring the first network address from the bookmark to be stored,
setting a display mode of the tree-like structure cluster, wherein the display mode of the tree-like structure cluster is compatible with display modes of the bookmarks which have been stored, so that the display mode of the bookmark may be switched or set without changing bookmark records which have been locally stored.

6. A setting device for a browser bookmark, comprising:
a first acquisition unit, configured to acquire a first network address from a bookmark to be stored, and extract a first root website from the first network address;
a second acquisition unit, configured to, if a tree-like structure cluster has been established by a storage module, acquire the tree-like structure cluster from the storage module, wherein the tree-like structure cluster comprises a domain name tree of at least one root website;
a matching unit, configured to judge whether there is a domain name tree of the first root website in the first acquisition unit in the tree-like structure cluster stored in the second acquisition unit or not, and send a judgment result to a structure cluster updating module;
the structure cluster updating module, configured to modify or construct the domain name tree of the first root website according to the judgment result sent by the matching unit, store the bookmark to be stored on a corresponding node of the domain name tree of the first root website, and store the bookmark to be stored in the storage module; and
the storage module, configured to store the modified or constructed domain name tree of the first root website from the structure cluster updating module and the first network address associated with the bookmark to be stored.

7. The device according to claim 6, further comprising:
a displaying updating module, configured to update bookmark displaying of the tree-like structure cluster to display and manage all stored bookmarks with a new tree-like structure cluster structure.

8. The device according to claim 6, wherein
the matching module is configured to judge whether there is the domain name tree of the first root website in the tree-like structure cluster or not, and send the judgment result to the structure cluster updating module; and
correspondingly, the structure cluster updating module is configured to, if the judgment result sent by the matching module is yes, store the bookmark to be stored on the corresponding node of the domain name tree of the first root website of the first network address according to a hierarchical structure of the first network address, and if the judgment result sent by the matching module is no, construct the domain name tree of the first root website, and store the bookmark to be stored on the corresponding node of the domain name tree of the first root website according to the hierarchical structure of the first network address.

9. The device according to any one of claims 6 to 8, further comprising:
an establishment module, configured to, if there is no tree-like structure cluster established in the storage module after the first root website is extracted from the first network address, establish a blank tree-like structure cluster, and trigger the structure cluster updating module, wherein
correspondingly, the structure cluster updating module is configured to store the bookmark to be stored on the corresponding node of the domain name tree of the first root website, and store the constructed domain name tree of the first root website and the first network address associated with the bookmark to be stored.

10. The device according to claim 9, further comprising:
a setting unit, configured to, before the first network address is acquired from the bookmark to be stored, set a display mode of the tree-like structure cluster in the displaying updating module, wherein the display mode of the tree-like structure cluster is compatible with display modes of the bookmarks which have been stored, so that the display mode of the bookmark may be switched or set without changing bookmark records which have been locally stored.

11. A terminal, comprising the device according to any one of claims 6 to 10.
